# EUROPÄISCHE PATENTSCHRIFT

(11) **EP 1 359 360 B1**
(45) Veröffentlichungstag und Bekanntmachung des Hinweises auf die Patenterteilung: **11.08.2004**
(21) Anmeldenummer: 03000909.6
(22) Anmeldetag: 16.01.2003
(51) Int. Cl.: F16L 21/03, F16L 17/025

(54) **Dichtring für eine Steckmuffenverbindung**
Sealing ring for a socket joint
Joint d'étanchéité pour un raccord à manchon

(30) Priorität: 03.05.2002 DE 10219865
(43) Veröffentlichungstag der Anmeldung: 05.11.2003
(73) Patentinhaber: M.O.L. GUMMIVERARBEITUNG GMBH & Co. KG, D-49377 Vechta (DE)
(72) Erfinder: Lamping, Alwin, 49393 Lohne (DE)
(74) Vertreter: Meyer, Ludgerus A.

(56) Entgegenhaltungen:
- DE-A- 19 713 329
- DE-A- 19 900 302
- US-A- 4 602 792
- US-A- 4 602 793
- US-B1- 6 277 315

## Beschreibung

Die Erfindung betrifft einen Dichtring für eine Steckmuffenverbindung nach dem Oberbegriff des Anspruchs 1.

Für die Abwasserführung werden normalerweise Kunststoffrohre verwendet, die durch Muffenverbindungen mit eingelegten Dichtringen zu längeren Rohrstrecken zusammengesetzt werden. Beim Einschieben eines Rohres in das Muffenende eines anderen Rohres legen sich die Dichtlippen der Dichtung eng an das anzuschließende Rohr an, so dass die Abdichtung der Rohrstrecke gewährleistet wird.

In den letzten Jahren hat es sich durchgesetzt, die zu verwendenden Dichtringe bereits fabrikmäßig in die Muffenenden der Rohre einzusetzen. Damit ist eine Unverlierbarkeit der Dichtung gewährleistet und auch sichergestellt, dass Verschmutzungen zwischen Dichtring und Sickengrund weitgehend verhindert werden können.

Aus der DE 197 13 329 ist ein Dichtring für eine Steckmuffenverbindung mit einem Verstärkungsring bekannt, bei dem die Dichtlippe unter einem Neigungswinkel schräg zum Lippensockel verläuft und der Dichtring auf der der Lippendichtung gegenüber liegenden Seite eine Endverdickung aufweist, auf der beim Einschieben des Spitzendes eines Rohres ein Teil der Lippendichtung zur Auflage kommt. Hierdurch wird die Endverdickung zusammengedrückt und erhöht damit die Andruckkraft der Lippendichtung.

Bei dieser bekannten Art von Dichtringen weist die Dichtung lediglich eine einzige Dichtlippe auf, die an dem einzuschiebenden Spitzende des Rohres anliegt. Es besteht dabei die Gefahr, dass mögliche Verschmutzungen der Lippendichtung zu einer Undichtigkeit der Rohrverbindung führen. Ferner ergibt sich beim Ablenken der Lippendichtung aufgrund des einzuschiebenden Spitzendes eine starke Verkeilung des Lippengrundes an einer Kante des Verstärkungsrings, so dass leicht die Gefahr einer Beschädigung der Lippendichtung besteht.

Auch die aus der EP 0 451 900 B1 bekannte Dichtung zeigt bereits eine Endverdickung, die den eingesetzten Verstärkungsring zum Teil überragt. Durch eine besondere Gestaltung der Lippendichtung wird dabei jedoch vermieden, dass eine Keilwirkung an der Kante des Dichtrings auftritt. Ferner sind insgesamt drei Lippen vorhanden, die eine verbesserte Dichtfunktion bewirken.

Aus der DE 199 00 302 A1 ist ein Dichtring für eine Steckmuffenverbindung bekannt, bei der die rückwärtige Andruckdichtung eine vordere schräg zur Radialebene des Rohres nach hinten geneigte Auflauffläche aufweist, über die bei Einschieben des Spitzendes eines zweiten Rohres in die Muffe durch die abgelenkte Lippendichtung die Andruckdichtung zur Anlage an das Spitzende des zweiten Rohres nach rückwärts und nach innen zur Rohrachse hin ausgelenkt wird. Damit kommt beim Einschieben des Spitzendes eines Rohres die abgelenkte Lippendichtung auf der Auflauffläche der Andruckdichtung zur Anlage und bei weiterem Einschieben des Rohres wird die Andruckdichtung in Einschubrichtung nach hinten gedrückt und gleichzeitig zusammengedrückt. Hierdurch bleibt die Dichtfunktion der Lippendichtung einerseits erhalten und andererseits auch die Dichtfunktion der Andruckdichtung erreichbar. Durch Andrücken der Lippendichtung an die Andruckdichtung wird ferner erreicht, dass die Andruckdichtung auch zusammengedrückt wird, und daher wird die Druckkraft der Dichtung erhöht.

Ausgehend von dem zuletzt genannten Stand der Technik, liegt der Erfindung die Aufgabe zugrunde, einen Dichtring für eine Steckmuffenverbindung anzugeben, der eine weiter verbesserte Abstreiffunktion und Dichtigkeit gewährleistet.

Diese Aufgabe wird durch die im Anspruch 1 angegebene Erfindung gelöst. Vorteilhafte Weiterbildung der Erfindung sind in Unteransprüchen angegeben.

Die Erfindung geht aus von einem Dichtring für eine Steckmuffenverbindung, die in eine im Querschnitt im wesentlichen rechteckige Ringsicke des Muffenendes eines Rohres einsetzbar ist. Der Dichtring weist an seinem Vorderende eine zur Rohrachse gerichtete zum rückwärtigen Ende hin angewinkelte Lippendichtung und am rückwärtigen Ende eine zur Rohrachse gerichtete Andruckdichtung auf. Die rückwärtige Andruckdichtung enthält eine vordere schräg zur Radialebene des Rohres nach hinten geneigte Andruckfläche, über die bei Einschieben des Spitzendes eines zweiten Rohres in die Muffe durch die abgelenkte Lippendichtung die Andruckdichtung zur Anlage an das Spitzende des zweiten Rohres nach rückwärts und nach innen zur Rohrachse hin ausgelenkt wird.

Erfindungsgemäß ist im unbelasteten Zustand der Dichtung die radiale Höhe der Rückenflanke der Lippendichtung größer als 2/3 der radialen Gesamthöhe der Dichtung gewählt. Die Lippendichtung ist dabei im Querschnitt im wesentlichen rechteckförmig gestaltet. Die zur Rohrachse gerichteten im wesentlichen flachen Andruckflächen der Lippendichtung und der Andruckdichtung bilden mit ihren jeweiligen Rückenflanken jeweils eine spitzen Winkel von kleiner als 90°. Das Verhältnis der radialen Höhe der Lippendichtung zur radialen Höhe der Andruckdichtung beträgt im unbelasteten Zustand 1,2 - 1,5 : 1.

Die erfindungsgemäßen Merkmale führen zu einem Dichtring für eine Steckmuffenverbindung, der einerseits einfach herzustellen ist, der beim Zusammensetzen zweier Rohre eine Rohrabstreifwirkung ermöglicht und der nach dem Zusammensetzen eine hohe Dichtigkeit und Andruckkraft sicherstellt.

Die erfindungsgemäße Ausbildung der Dichtung sichert das Vorhandensein zweier Dichtlippenausläufe mit kleinem Verrundungsradius, welche auch nach dem Einschieben des Rohres ihre Funktion behalten.

Ein bevorzugter Bereich des Verhältnisses in Höhe der Lippendichtung zur Höhe der Andruckdichtung beträgt im unbelasteten Zustand 1,3 - 1,4 : 1. Dadurch sind die Höhen von Andruck- und Lippendichtung optimal aufeinander abgestimmt.

Um eine hohe Abstreifwirkung zu erzielen, beträgt der maximale Verrundungsradius des Auslaufs der Lippendichtung und der Andruckdichtung vorzugsweise weniger als 0,2 mm.

Bei einer bevorzugten Ausführungsform mit einem in die Dichtung eingelegten Verstärkungsring weist die Andruckdichtung eine den Verstärkungsring teilweise umgreifende integral mit der Andruckdichtung ausgestattete Haltekralle auf, deren Breite etwa ¼ der Breite des Verstärkungsrings beträgt.

Bei einer Ausführungsform ohne eingesetzten Verstärkungsring weist der Dichtungsring vorzugsweise eine innen am Fuß der Andruckdichtung umlaufende Kerbe auf, so dass ein einfacheres Ablenken der Andruckdichtung möglich wird und die Gefahr der Überdehnung im Übergangsbereich zwischen Dichtungsgrund und Andruckdichtung verringert wird.

In weiterer bevorzugter Ausgestaltung der Erfindung kann vorgesehen sein, dass der Dichtungsgrund zwischen Lippendichtung und Andruckdichtung eine höhere Shorehärte als die Lippendichtung und die Andruckdichtung aufweist. Dies kann vorzugsweise dadurch erreicht werden, dass der Dichtungsgrund als harter fester Kunststoffkörper ausgebildet ist und die Lippendichtung und die Andruckdichtung jeweils als Weichteile an den Dichtungsgrund angespritzt sind.

Die Erfindung wird nachstehend anhand von nicht maßstabsgetreuen Ausführungsbeispielen näher erläutert. Es zeigen:
- Fig. 1: eine Querschnittsansicht durch eine erfindungsgemäße Dichtung mit eingelegtem Verstärkungsring im unbelasteten Zustand,
- Fig. 2: eine Dichtung gemäß Fig. 1 im eingebauten und belasteten Zustand,
- Fig. 3: eine erfindungsgemäße Dichtung ohne eingelegten Verstärkungsring im unbelasteten Zustand,
- Fig. 4: einen Dichtungsring nach Fig. 3 im eingebauten belasteten Zustand, und
- Fig. 5: einen Dichtungsring mit einer unterschiedlichen Härte.

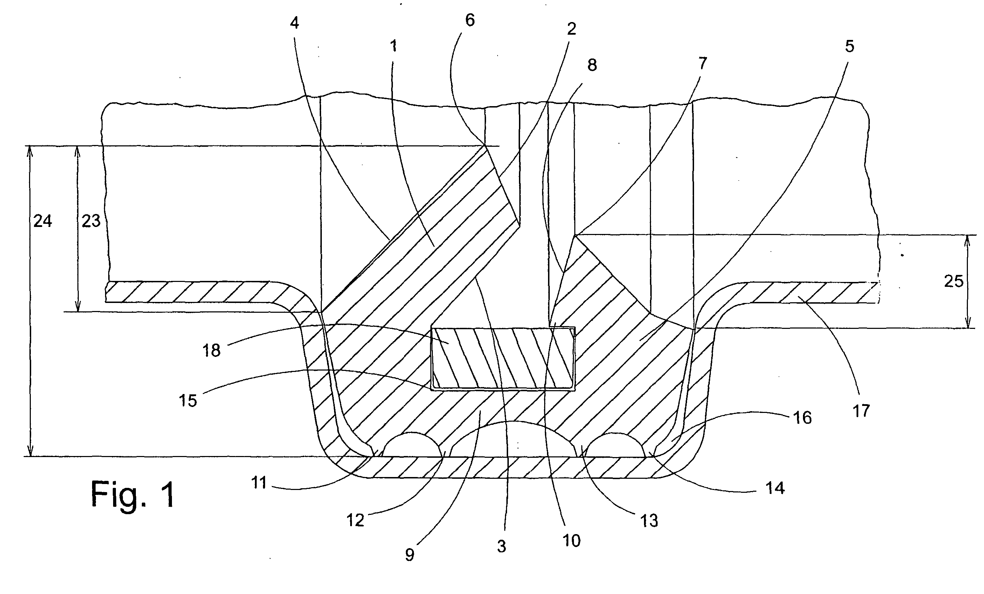

Die in Fig. 1 dargestellte Dichtung ist in einer Ringsicke 16 des Muffenendes 17 eines Kunststoffrohres eingesetzt. Sie erhält einen aus Stahl oder Kunststoff bestehenden Verstärkungsring 18. Der Verstärkungsring befindet sich in einer Ausnehmung 15 der Dichtung, die an der Vorderseite der Dichtung von einer Lippendichtung 1 und an der Rückseite der Dichtung von einer Andruckdichtung 5 seitlich begrenzt wird. Fig. 1 zeigt die Dichtung in eingebautem, jedoch nicht belastetem Zustand.

Die Lippendichtung 1 weist eine Rückenflanke 4 auf, die im belastetem Zustand an der Außenseite eines eingeschobenen Rohres anliegt. Die Innenflanke 3 der Lippendichtung 1 liegt im belasteten Zustand auf dem Verstärkungsring 18 auf. Der Querschnitt der Lippendichtung 1 ist im wesentlichen rechteckförmig gestaltet, wobei die vordere Andruckfläche 2 der Lippendichtung 1 in einem spitzen Winkel von kleiner als 90° zur Rückenflanke 4 unter Bildung eines scharfkantigen Auslaufs 6 mit einem Verrundungsradius kleiner als 0,2 mm verläuft.

Die Andruckdichtung 5 ist im Querschnitt im wesentlichen dreieckförmig gestaltet, wobei sie eine vordere Andruckfläche 8 aufweist, die mit ihrer gegenüberliegenden Flanke einen spitzen Winkel mit einem Verrundungsradius 7 von ebenfalls kleiner als 0,2 mm bildet. Die Andruckdichtung 5 weist ferner eine auf dem Verstärkungsring 18 aufliegende Haltekralle 10 auf, deren Breite etwa ¼ der Breite des Verstärkungsrings 18 beträgt.

An der Außenseite der Dichtung sind mehrere Vorsprünge 11 - 14 ausgebildet, die eine bessere Abdichtung der Dichtung in der Ringsicke 16 in dem Muffenende 17 ermöglichen.

Die radiale Höhe 23 der Lippenflanke 4 beträgt mehr als 2/3 der Gesamthöhe 24 der Dichtung.

Ferner ist die radiale Höhe 23 1,3 - 1,4 mal höher als die radiale Höhe 25 der Andruckdichtung 5 gewählt.

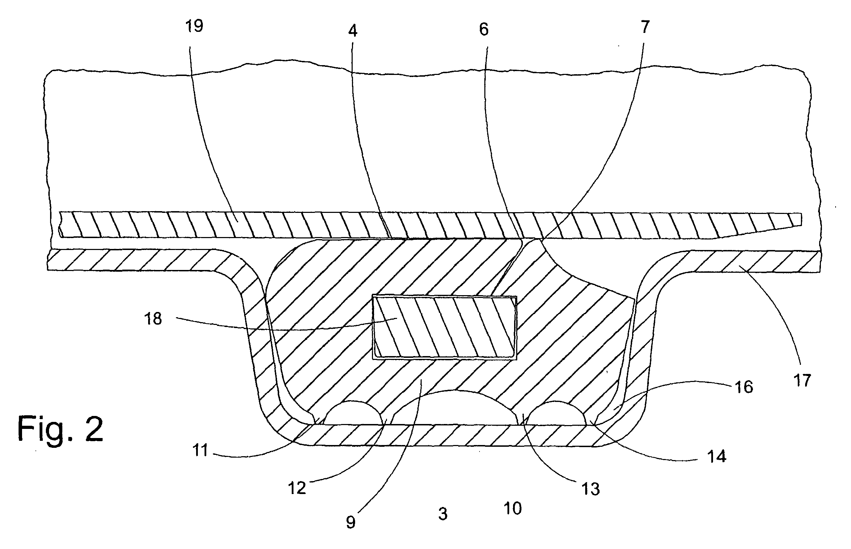

Fig. 2 zeigt die Dichtung aus Fig. 1 im eingebauten belasteten Zustand. Die Rückenflanke 4 der Lippendichtung liegt dabei an der Außenseite des Spitzendes 19 eines eingeschobenen Rohres an. Lippendichtung 1 und Andruckdichtung 5 drücken mit ihren gegenüberliegenden Andruckflächen unmittelbar aufeinander, wobei jedoch die Ausläufe 6 und 7 an dem Spitzende 19 unter Bildung eines kleinen Abstandes zwei Abstreifbereiche bilden, die unmittelbar aufeinander folgen. Dadurch ergibt sich eine Doppeldichtung mit gleichzeitig hoher Andruckkraft der Dichtung.

Der eingesetzte Verstärkungsring 18 wird von der Lippendichtung 1 und der Andruckdichtung 5 vollständig umschlossen. Ferner ist im eingebauten belasteten Zustand nahezu der gesamte Bereich der Ringsicke 16 durch Dichtungsmaterial ausgeführt.

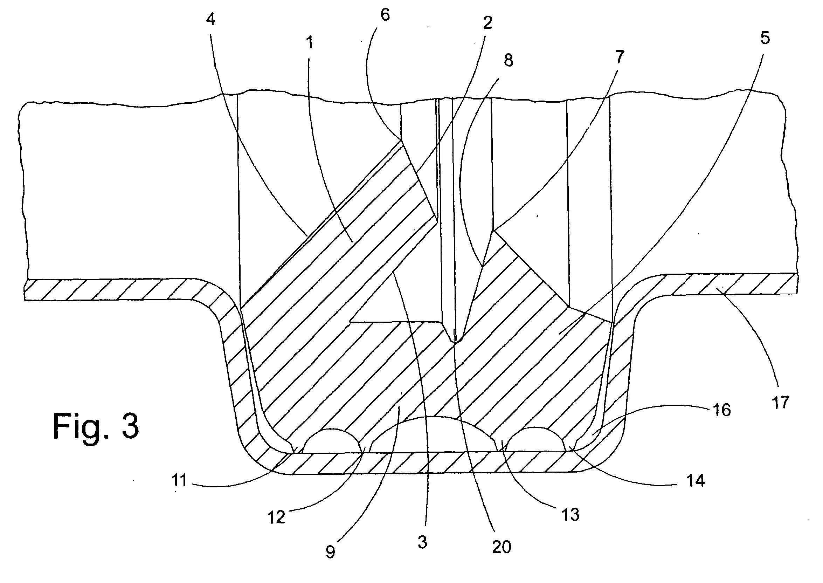

In einer zweiten Ausführungsform gemäß Fig. 3 ist kein Verstärkungsring vorhanden, sondern der Dichtungsgrund 9 weist stattdessen eine größere Dicke auf, die auch den Raum einnimmt, der in der ersten Ausführungsform von dem Verstärkungsring eingenommen wird.

Zur Vermeidung einer Überdehnung des Übergangsbereichs zwischen Andruckdichtung 5 und Dichtungsgrund 9 und zur Verbesserung der Ausdehnmöglichkeit der Andruckdichtung 5 befindet sich am Fuß der Andruckdichtung 5 eine umlaufende Kerbe 20.

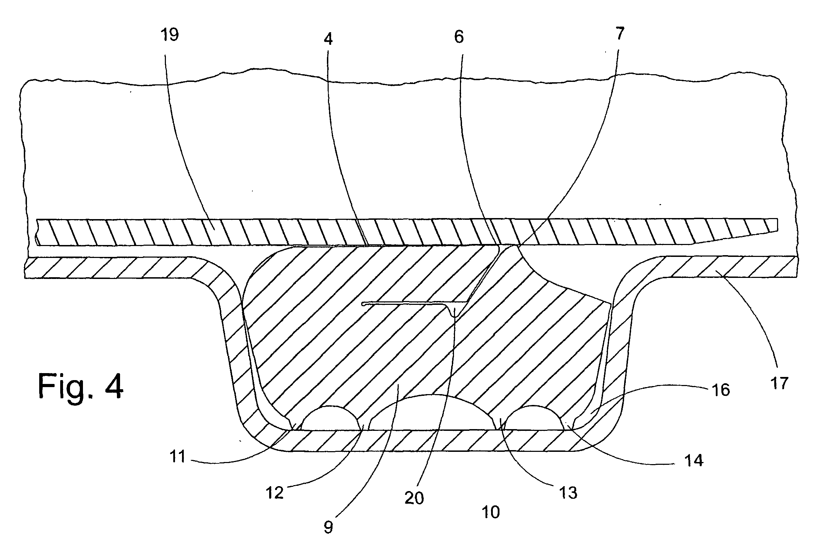

Fig. 4 zeigt die Ausführungsform des Dichtungsring nach Fig. 3 im belasteten Zustand. Es wird deutlich, dass durch die seitliche Ausdehnung der Andruckdichtung 5 die Kerbe 20 verhindert, dass der Übergang zwischen Andruckdichtung 5 und Dichtungsgrund 9 überdehnt wird und demzufolge zu hohe Steckkräfte entstehen.

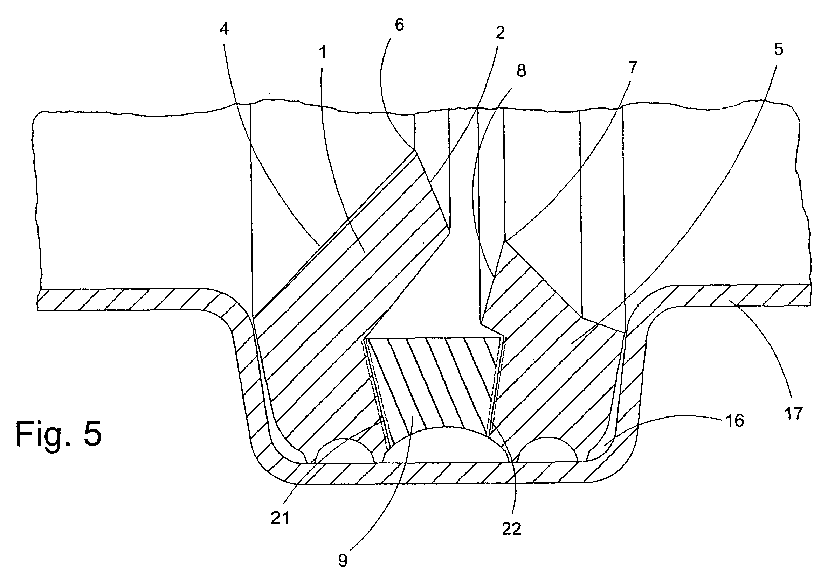

Schließlich zeigt Fig. 5 eine dritte Ausführungsform einer Dichtung ohne eingesetzten Verstärkungsring, bei der der Dichtungsgrund 9 aus einem härteren Material mit höherer Shorehärte ausgebildet ist, das im wesentlichen die Funktion des Verstärkungsrings 18 gemäß Fig. 1 übernimmt. An den Dichtungsring 9 schließen sich die Lippendichtung 1 und die Andruckdichtung 5 als Weichteile an, die über die Verbindungen 21 und 22 mit dem Dichtungsgrund 9 verschweißt sind.

### Bezugszeichen

- 1: Lippendichtung
- 2: Andruckfläche
- 3: Innenflanke
- 4: Rückenflanke
- 5: Andruckdichtung
- 6: Auslauf
- 7: Auslauf
- 8: Andruckfläche
- 9: Dichtungsgrund
- 10: Haltekralle
- 11: Vorsprung
- 12: Vorsprung
- 13: Vorsprung
- 14: Vorsprung
- 15: Ausnehmung
- 16: Ringsicke
- 17: Muffenende
- 18: Verstärkungsring
- 19: Spitzende
- 20: Kerbe
- 21: Verbindung
- 22: Verbindung
- 23: Höhe der Rückenflanke
- 24: Gesamthöhe
- 25: radiale Höhe

## Patentansprüche

1. Dichtring für eine Steckmuffenverbindung, der in eine im Querschnitt im wesentlichen rechteckige Ringsicke (16) des Muffenendes (17) eines Rohres einsetzbar ist, wobei der Dichtring an seinem Vorderende eine zur Rohrachse gerichtete zum rückwärtige Ende hin angewinkelte Lippendichtung (1) aufweist, und am rückwärtigen Ende eine zur Rohrachse gerichtete Andruckdichtung (5) enthält, wobei die rückwärtige Andruckdichtung (5) eine vordere schräg zur Radialebene des Rohres nach hinten geneigte Andruckfläche (8) aufweist, über die bei Einschieben des Spitzendes (19) eines zweiten Rohres in das Muffenende durch die Andruckfläche (2) der abgelenkten Lippendichtung (1) die Andruckdichtung (5) zur Anlage an das Spitzende des zweiten Rohres nach rückwärts und nach innen zur Rohrachse hin auslenkbar ist, **dadurch gekennzeichnet, dass** im unbelasteten Zustand der Dichtung die radiale Höhe (23) der Rückenflanke (4) der Lippendichtung (1) größer als 2/3 der radialen Gesamthöhe (24) des Dichtrings beträgt, dass die Lippendichtung (1) im Querschnitt im wesentlichen rechteckförmig gestaltet ist, dass die zur Rohrachse gerichteten im wesentlichen flach ausgestalteten Andruckflächen (2, 8) der Lippendichtung (1) und der Andruckdichtung (5) mit ihren jeweiligen Rückenflanken jeweils einen spitzen Winkel kleiner als 90° bilden, und dass das Verhältnis der radialen Höhe (23) der Lippendichtung (1) zur radialen Höhe (25) der Andruckdichtung (5) im unbelasteten Zustand 1,2 - 1,5 : 1 beträgt.

2. Dichtring nach Anspruch 1, **dadurch gekennzeichnet, dass** das Verhältnis der radialen Höhe (23) der Lippendichtung (1) zur radialen Höhe (25) der Andruckdichtung (5) im unbelasteten Zustand 1,3 - 1,4 : 1 beträgt.

3. Dichtring nach Anspruch 1, **dadurch gekennzeichnet, dass** der maximale Verrundungsradius des Auslaufs (6) der Lippendichtung (1) und des Auslaufs (7) der Andruckdichtung (5) kleiner als 0,2 mm beträgt.

4. Dichtring nach Anspruch 1 mit einem umlaufenden Verstärkungsring (18), der in einer zur Rohrachse gerichteten Ausnehmung (15) des Dichtrings aufgenommen ist, **dadurch gekennzeichnet, dass** die Andruckdichtung (5) eine den Verstärkungsring (18) teilweise umgreifende integral mit der Andruckdichtung (5) ausgestaltete Haltekralle (10) aufweist, deren Breite etwa ¼ der Breite des Verstärkungsrings (18) beträgt.

5. Dichtungsring nach Anspruch 1, 2 oder 3, **dadurch gekennzeichnet, dass** der Dichtungsgrund (9) zwischen Lippendichtung (1) und Andruckdichtung (5) am Fuß der Andruckdichtung (5) eine innen umlaufende Kerbe (20) aufweist.

6. Dichtungsring nach Anspruch 1, 2 oder 3, **dadurch gekennzeichnet, dass** der Dichtungsgrund (9) zwischen Lippendichtung (1) und Andruckdichtung (5) eine höhere Shorehärte als die Lippendichtung (1) und die Andruckdichtung (5) aufweist.

7. Dichtungsring nach Anspruch 6, **dadurch gekennzeichnet, dass** der Dichtungsgrund (9) als harter, fester Kunststoffkörper ausgebildet ist und die Lippendichtung (1) und Andruckdichtung (5) als Weichteile an den Dichtungsgrund angespritzt sind.

## Claims

1. Sealing ring for a push-in socket joint, which sealing ring can be inserted in an annular corrugation (16), which is substantially rectangular in cross-section, in the socket end (17) of a pipe, wherein the sealing ring has, at its front end, a lip seal (1) which is directed at the axis of the pipe and is bent towards the rearward end, and said sealing ring contains, at the rearward end, a pressure-applying seal (5) which is directed at the axis of the pipe; and wherein the rearward pressure-applying seal (5) has a front pressure-applying face (8) which is inclined rearwards, obliquely to the radial plane of the pipe, and via which, when the spigot end (19) of a second pipe is pushed into the socket end through the pressure-applying face (2) of the deflected-away lip seal (1), said pressure-applying seal (5) can be deflected rearwards and inwards towards the axis of the pipe in order to rest against the spigot end of the second pipe, **characterised in that**, when the seal is in the non-loaded condition, the radial height (23) of the back flank (4) of the lip seal (1) is greater than 2/3 of the overall radial height (24) of the sealing ring; that the lip seal (1) is of substantially rectangular shape in cross-section; that the pressure-applying faces (2, 8) of the lip seal (1) and pressure-applying seal (5), which pressure-applying faces are directed at the axis of the pipe and are of substantially flat configuration, each form an acute angle smaller than 90° with their respective back flanks; and that the ratio of the radial height (23) of the lip seal (1) to the radial height (25) of the pressure-applying seal (5) amounts to 1.2 - 1.5 : 1 in the non-loaded condition.

2. Sealing ring according to claim 1, **characterised in that** the ratio of the radial height (23) of the lip seal (1) to the radial height (25) of the pressure-applying seal (5) amounts to 1.3 - 1.4 : 1 in the non-loaded condition.

3. Sealing ring according to claim 1, **characterised in that** the maximum rounding-off radius of the mouth (6) of the lip seal (1) and of the mouth (7) of the pressure-applying seal (5) is smaller than 0.2 mm.

4. Sealing ring according to claim 1 with a circumferential reinforcing ring (18) which is received in a clearance (15) in said sealing ring which is directed at the axis of the pipe, **characterised in that** the pressure-applying seal (5) has a retaining claw (10) which partially encompasses the reinforcing ring (18) and is configured in a manner integral with said pressure-applying seal (5) and the breadth of which amounts to about 1/4 of the breadth of the reinforcing ring (18).

5. Sealing ring according to claim 1, 2 or 3, **characterised in that** the base (9) of the seal has, between the lip seal (1) and the pressure-applying seal (5), an internally circumferential notch (20) at the foot of the pressure-applying seal (5).

6. Sealing ring according to claim 1, 2 or 3, **characterised in that** the base (9) of the seal has, between the lip seal (1) and the pressure-applying seal (5), a higher Shore hardness than said lip seal (1) and said pressure-applying seal (5).

7. Sealing ring according to claim 6, **characterised in that** the base (9) of the seal is constructed as a hard, firm plastic body and the lip seal (1) and pressure-applying seal (5) are injection-moulded onto said base of the seal in the form of soft parts.

## Revendications

1. Bague d'étanchéité pour un raccord à manchon, qui est apte à être placée dans une moulure annulaire (16) à section transversale sensiblement rectangulaire de l'extrémité de manchon (17) d'un tube, étant précisé que la bague d'étanchéité présente à son extrémité avant un joint à lèvre (1) qui est dirigé vers l'axe du tube et qui est coudé vers l'extrémité arrière, et contient à son extrémité arrière un joint de pression (5) qui est dirigé vers l'axe du tube, et étant précisé que le joint de pression arrière (5) présente une surface de pression avant (8) qui est inclinée vers l'arrière par rapport au plan radial du tube et par l'intermédiaire de laquelle lors de l'introduction de l'extrémité (19) d'un second tube dans l'extrémité de manchon le joint de pression (5), grâce à la surface de pression (2) du joint à lèvre (1) dévié, est apte à être dévié vers l'arrière et vers l'intérieur en direction de l'axe de tube en vue de venir s'appliquer contre ladite extrémité du second tube, **caractérisée en ce que** dans la position non contrainte du joint, la hauteur radiale (23) du flanc arrière (4) du joint à lèvre (1) est supérieure à 2/3 de la hauteur totale radiale (24) de la bague d'étanchéité, **en ce que** le joint à lèvre (1) est sensiblement rectangulaire, en section transversale, **en ce que** les surfaces de pression (2, 8) du joint à lèvre (1) et du joint de pression (5), dirigées vers l'axe de tube et sensiblement plates, définissent avec leurs flancs arrière respectifs un angle aigu inférieur à 90°, et **en ce que** le rapport de la hauteur radiale (23) du joint à lèvre (1) sur la hauteur radiale (25) du joint de pression (5), en position non contrainte, est de 1,2-1,5:1.

2. Bague d'étanchéité selon la revendication 1, **caractérisée en ce que** le rapport de la hauteur radiale (23) du joint à lèvre (1) sur la hauteur radiale (25) du joint de pression (5), en position non contrainte, est de 1,3-1,4:1.

3. Bague d'étanchéité selon la revendication 1, **caractérisée en ce que** le rayon de courbure maximal de l'extrémité (6) du joint à lèvre (1) et de l'extrémité (7) du joint de pression (5) est inférieur à 0,2 mm.

4. Bague d'étanchéité selon la revendication 1, comportant une bague de renforcement périphérique (18) logée dans un creux (15) de ladite bague d'étanchéité qui est dirigé vers l'axe de tube, **caractérisée en ce que** le joint de pression (5) comporte un crampon de fixation (10) qui enserre partiellement la bague de renforcement (18), qui est solidaire du joint de pression (5) et dont la largeur est égale à environ ¼ de la largeur de la bague de renforcement (18).

5. Bague d'étanchéité selon la revendication 1, 2 ou 3, **caractérisée en ce que** le fond de joint (9) défini entre le joint à lèvre (1) et le joint de pression (5) présente à la base de ce dernier une encoche périphérique intérieure (20).

6. Bague d'étanchéité selon la revendication 1, 2 ou 3, **caractérisée en ce que** le fond de joint (9) défini entre le joint à lèvre (1) et le joint de pression (5) présente une dureté Shore supérieure à celle du joint à lèvre (1) et du joint de pression (5).

7. Bague d'étanchéité selon la revendication 6, **caractérisée en ce que** le fond de joint (9) est conçu comme un corps en matière plastique dur et résistant, et le joint à lèvre (1) et le joint de pression (5) sont rapportés par injection sur le fond de joint, sous la forme d'éléments souples.
